(19) **Europäisches Patentamt**

**European Patent Office**

**Office européen des brevets**

(11) **EP 0 766 615 B1**

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(21) Anmeldenummer: **95920754.9**

(22) Anmeldetag: **03.06.1995**

(51) Int. Cl.$^6$: **B29C 47/60**, B01F 15/00, F16D 3/06

(86) Internationale Anmeldenummer:
**PCT/DE95/00728**

(87) Internationale Veröffentlichungsnummer:
**WO 95/35195 (28.12.1995 Gazette 1995/55)**

(54) **SCHNECKENMASCHINE MIT AUFSTECKBAREN SCHNECKENSATZELEMENTEN**

WORM WITH INSERTABLE WORM COMPONENTS

MACHINE A VIS SANS FIN COMPORTANT DES ELEMENTS HELICOIDAUX EMBOITABLES

(84) Benannte Vertragsstaaten:
**BE FR GB IT LU NL**

(30) Priorität: **20.06.1994 DE 4421514**

(43) Veröffentlichungstag der Anmeldung:
**09.04.1997 Patentblatt 1997/15**

(73) Patentinhaber:
**Krupp Werner & Pfleiderer GmbH**
**70469 Stuttgart (DE)**

(72) Erfinder:
• **WEIHRICH, Gerhard**
**D-75428 Illingen (DE)**
• **WÖRZ, Wolfgang**
**D-75428 Illingen (DE)**
• **WUTTKE, Reinhard**
**D-70374 Stuttgart (DE)**
• **SAUTER, Rainer**
**D-71686 Remseck (DE)**

(74) Vertreter:
**Rau, Manfred, Dr. Dipl.-Ing. et al**
**Rau, Schneck & Hübner**
**Patentanwälte**
**Königstrasse 2**
**90402 Nürnberg (DE)**

(56) Entgegenhaltungen:
EP-A- 0 399 869          EP-A- 0 426 619
DE-A- 1 264 883          DE-A- 1 502 337
US-A- 3 998 318

**Beschreibung**

Die Erfindung betrifft eine Schneckenmaschine zur Aufbereitung von Stoffen, insbesondere für die Kunststoffaufbereitung mit wenigstens einer in einem Gehäuse angeordneten antreibbaren Welle, auf welcher in beliebiger Reihenfolge verschleissfeste Schneckensatzelemente aufsteckbar sind.

Schneckenwellen bei Schneckenextrudern werden heute dem Stand der Technik nach im Baukastenprinzip ausgeführt. Dabei werden auf einem Wellenschaft Schnecken-und Knetelemente für die unterschiedlichsten Funktionen wie Fördern, Plastifizieren, Mischen und Scheren, Homogenisieren, Entgasen sowie Druckaufbau in frei wählbarer Reihenfolge aufgeschoben. Eine formschlüssige Verbindung sichert die Schneckensatzelemente gegen Verdrehung und ermöglicht die Übertragung des Drehmomentes der angetriebenen Welle auf die Schneckensatzelemente.

Die unterschiedlichen Verfahrensaufgaben machen es erforderlich, den Werkstoff an diese Aufgaben anzupassen, z.B. verschleissfeste-,korrosionsfeste- oder Kombinationen aus beiden. Bedingt durch das jeweilige Verbindungssystem Welle/Nabe (Passfeder-,6-Keil-, Vielkeil- oder Evolventenverzahnung, (z.B. DE-OS 15 02 337) kommt es zu Spannungskonzentrationen an Kerben oder Nuten. Speziell bei durchgehärteten Elementen aus verschleissbeständigen Werkstoffen (Werkzeugstähle, Kaltarbeitsstähle, Schnellarbeitsstähle) können diese Spannungskonzentrationen zum Bruch des Elementes führen, was erhebliche Folgeschäden in einem Schneckenextruder verursachen kann.

Aus der DE 42 06 219 A1 ist es bekannt um die Belastbarkeit der Welle zu erhöhen als Drehmomentübertragungselemente zwischen Welle und Schneckensatzelemente federnde Keile zu verwenden.

Abgesehen davon, dass diese Massnahme nur beim Einsatz von Passfedern als Drehmomentübertragungselemente und Nut als Längsaussparung anwendbar ist (nicht bei Vielkeil-, Evolventenverzahnung u.ä.) können hiermit nicht die an den Schneckensatzelemente auftretenden Spannungsspitzen (Nabenrandspannungen) gezielt abgebaut werden, da die Verformung der so ausgebildeten Passfeder immer auf der gesamten Länge eintritt.

Zur Verringerung der Bruchgefahr werden daher in der Praxis zumeist Schneckensatzelemente eingesetzt, die aus einem Verbundwerkstoff hergestellt sind, bestehend aus einem duktilen Kernwerkstoff, in den das Profil des Verbindungssystemes eingebracht ist und einem Mantelwerkstoff, der die Aufgabe der Verschleiss- und/oder Korrosionsbeständigkeit übernimmt. Typische Herstellungsverfahren für diesen Verbundwerkstoff sind schmelzmetallurgisch hergestellte Gusswerkstoffe, Lötverbunde oder heissisostatisch hergestellte PM-Verbunde.

Die Herstellung dieser Verbundwerkstoffe ist sehr kostenintensiv und vielfach für ein Verschleissteil nicht mehr wirtschaftlich.

Das der Erfindung zugrunde liegende technische Problem besteht darin, die Kopplung zwischen der bzw. den Wellen einer Schneckenmaschine und den aufsteckbaren Schneckensatzelemente so zugestalten, dass das Bruchrisiko bei der Drehmomentübertragung, insbesondere bei aus durchhartem Material bestehenden Schneckensatzelementen, erheblich verringert wird.

Dieses Problem wird durch die im kennzeichnenden Teil des Anspruches 1 aufgeführten Merkmale gelöst. Hiernach werden die punktförmigen Belastungen an den Stirnseiten (Nabenrand) der Schneckensatzelemente bei der Übertragung des Drehmomentes vermieden, da die Formänderung der Welle infolge des Wellendrehmomentes durch die V-förmige Erweiterung der Flankenflächen der Nut auf eine relativ lange Kontaktfläche verteilt ist. In Weiterbildung der Erfindung nach Anspruch 2 ist eine Optimierung der Kopplung für jeden Wellendurchmesser gegeben. Nach diesen Bedingungen kann für jeden Anwendungsfall die optimale Flankenerweiterung ermittelt werden.

Der bevorzugte Anwendungsfall der Erfindung liegt bei Schneckensatzelementen, die aus einem durchharten metallischen oder nichtmetallischen Werkstoff bestehen und daher sehr bruchempfindlich sind.

Weitere Vorteile sind nachstehend anhand eines Ausführungsbeispieles mit Zeichnung erläutert. Es zeigen:

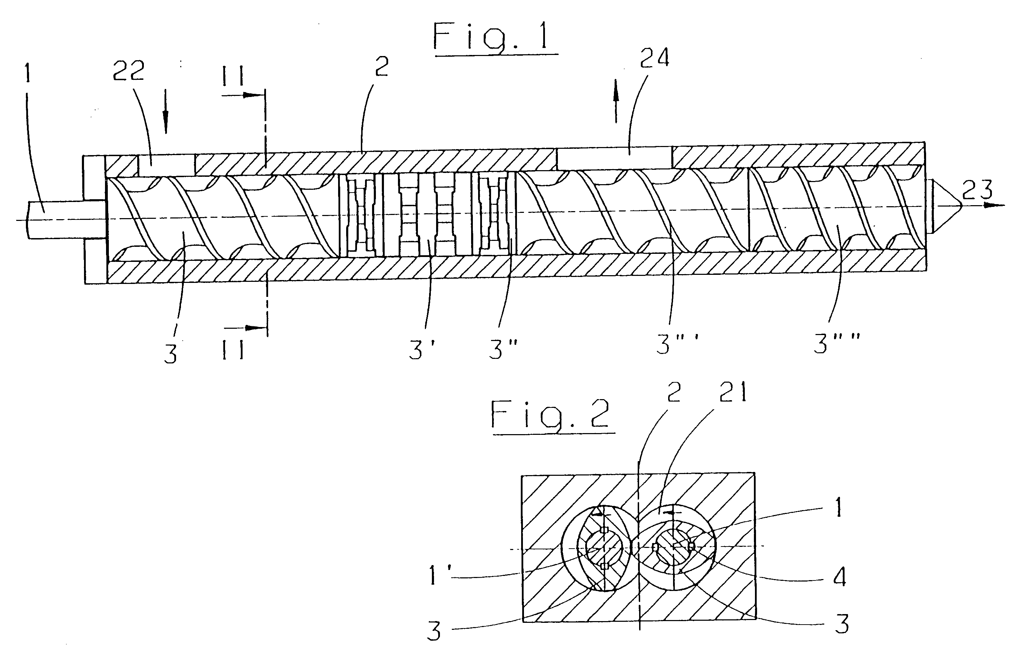

Fig. 1     ein Gehäuse einer Gleichdrall-Doppelschneckenmaschine im Schnitt in Seitenansicht

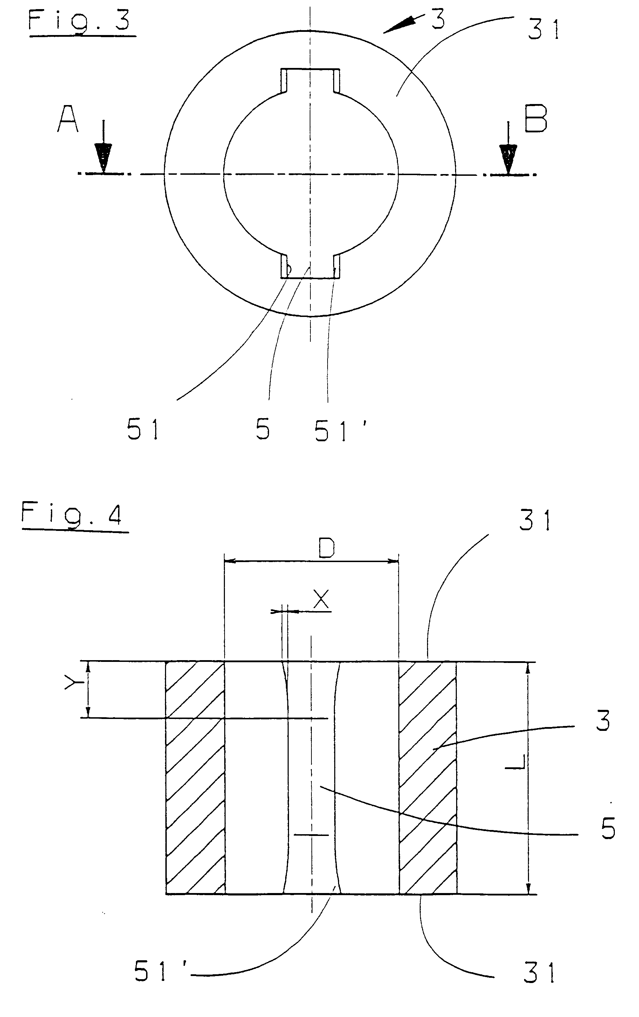

Fig. 2     einen Schnitt entlang der Linie II-II aus Fig. 1

Fig. 3     eine Stirnansicht eines Schneckensatzelementes

Fig. 4     einen Schnitt entlang der Linie A-B aus Fig. 3

Fig. 5     eine Seitenansicht eines Schneckensatzelementes

Fig. 6     einen Schnitt entlang der Linie C-D aus Fig. 5

Im Gehäuse 2 einer Schneckenmaschine ist eine durchgehende brillenförmige Bohrung 21 für die Aufnahme der mit Schneckensatzelementen 3 bestückten Wellen 1,1' angeordnet. Die Wellen 1,1' werden über einen nichtgezeigten Motor und Getriebe gleichsinnig drehend angetrieben.

In der Zeichnung sind Passfedern 4 als Drehmomentübertragungselemente und Nuten 5 als Längsaussparungen in den Schneckensatzelemente 3 gezeigt. An Stelle der gezeigten Wellen/Naben-Verbindung können natürlich auch alle anderen bei Schneckensatzelementen bekannten Verbindungselemente, wie 6-Keil-, Vielkeil, Kerb und/oder Evolventenverzahnung mit der erfindungsgemässen V-förmigen Erweiterung ausgestattet werden.

In Abhängigkeit des zu verarbeitenden Materials werden auf den Wellen 1,1' in frei wählbarer Reihenfolge Schneckensatzelemente 3-3"" (Knet-, Schnecken-, Förder-, Druckaufbauelement u.a. m) aufgeschoben.

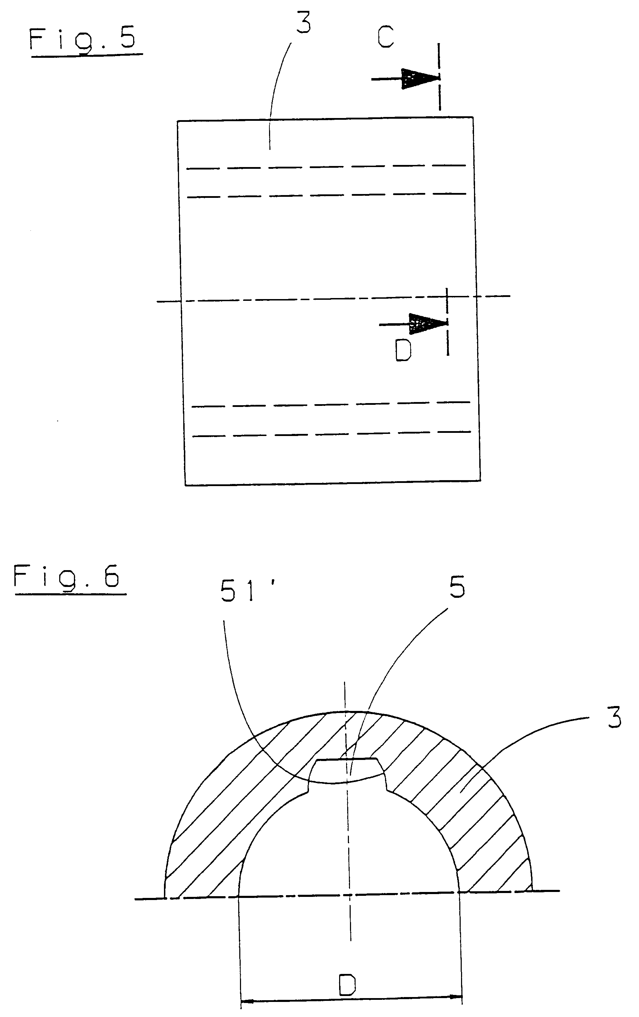

Mit 22 ist der Eintrag, mit 24 die Entgasungsöffnung und mit 23 der Austrag der Schneckenmaschine bezeichnet. Zum Abbau der Randspannungen sind die Flanken 51 der Nuten 5 zu den Stirnseiten 31 hin V-förmig erweitert gestaltet (Fig. 4). Diese erweiterte Flankenfläche 51' ist als doppelt gekrümmte Raumfläche ausgebildet und wird in Abhängigkeit des Durchmessers der Wellen 1,1' und deren Formänderung infolge des Wellendrehmomentes für jeden Anwendungsfall neu berechnet.

Die Begrenzung in axialer Richtung kann dabei mit $y \leqq \frac{L}{2}$ bzw. $y \leqq D$ und in Umfangsrichtung mit $x \leqq 0,02\,D$ festgelegt werden.

Das bevorzugte Anwendungsgebiet der Erfindung liegt bei verschleissfesten Schneckensatzelementen, die nur aus einem durchharten Werkstoff bestehen und beanspruchsbedingt sehr bruchempfindlich sind. Bei den Werkstoffen kann es sich um harte oder härtbare metallische Werkstoffe oder um harte nichtmetallische Werkstoffe, wie. z.B. Keramik, Zirkonoxid, Aluminiumoxid oder ähnlichem handeln. Mit der Erfindung kann das Bruchrisiko dieser empfindlichen Schneckensatzelemente um mehr als 50 % gegenüber den herkömmlichen Wellen/Nabenverbindungen gesenkt werden.

## Patentansprüche

1. Schneckenmaschine zur Aufbereitung von Stoffen, insbesondere für die Kunststoffaufbereitung mit wenigstens einer in einem Gehäuse angeordneten antreibbaren Welle, auf welcher verschleissfeste Schneckensatzelemente in beliebiger Reihenfolge formschlüssig aufsteckbar sind, wobei in den Schneckensatzelementen wenigstens eine Längsaussparung (Nut) für die Aufnahme eines Drehmomentübertragungselementes (Passfeder) eingebracht ist, dadurch gekennzeichnet, dass die Flanken (51) der Längsaussparung (5) in Richtung der Stirnseiten (31) jeweils V-förmig erweitert ausgebildet sind, wobei diese erweiterte Flankenfläche (51') als doppeltgekrümmte Raumfläche geformt ist.

2. Schneckenmaschine nach Anspruch 1, dadurch gekennzeichnet, dass die V-förmige Erweiterung der Flanken (51) nach Massgabe der Formänderung der Welle infolge des Wellendrehmomentes durch folgende Bedingungen

$$x \leqq 0,02\,D$$

$$y \leqq \frac{L}{2} \text{ oder} \leqq D$$

eingegrenzt ist, wobei

D= Durchmesser der jeweiligen Welle (1)

L= Länge des jeweiligen Schneckensatzelementes (3)

X= Mass für die jeweilige Erweiterung in Umfangsrichtung an der Stirnseite (31)

Y= Mass für die jeweilige axiale Erstreckung der Erweiterung

3. Schneckenmaschine nach Anspruch 1 oder 2, dadurch gekennzeichnet, dass die Erfindung bei verschleissfesten Schneckensatzelementen (3), die nur aus einem durchharten metallischen oder nichtmetallischen Werkstoff bestehen, verwendet wird.

## Claims

1. Screw-type extruding machine for the preparation of substances, in particular for plastics processing, having at least one drivable shaft disposed in a housing and on which wear-resistant screw components can be placed in arbitrary sequence, having positive fit, at least one lengthwise recess (groove) for the accommodation of a torque transmission component (fitted key) being provided in the screw components, characterized in that the flanks (51) of the lengthwise recess (5) are formed to expand in the shape of a V in the direction of the fronts (31), this expanded flank surface (51') being formed as a double curved space surface.

2. Screw-type extruding machine according to claim 1, characterized in that the V-shaped expansion of the flanks (51), according to the change of shape of the shaft by reason of the shaft torque, is defined by the following conditions

$$x \leq 0.02\,D$$

$$y \leq \frac{L}{2} \text{ or} \leq D$$

D being the diameter of the respective shaft (1),
L being the length of the respective screw component (3),
X being the measure for the respective expansion in the peripheral direction on the front (31),
Y being the measure for the respective axial length of the expansion.

3.  Screw-type extruding machine according to claim 1 or 2, characterized in that the invention is used for wear-resistant screw components (3) which consist of a through-hardened metallic or non-metallic material.

## Revendications

1.  Machine à vis sans fin pour l'élaboration de matières, notamment pour l'élaboration de matières plastiques, présentant au moins un arbre entraînable qui est logé dans un carter, et sur lequel des éléments hélicoïdaux résistant à l'usure peuvent être emboîtés par concordance de formes, en n'importe quelle succession, au moins une échancrure longitudinale (saignée) étant pratiquée dans les éléments hélicoïdaux, en vue de recevoir un élément de transmission de couples de rotation (clavette), caractérisée par le fait que les flancs (51) de l'échancrure longitudinale (5) sont respectivement réalisés avec évasement en V dans la direction des faces extrêmes (31), cette surface de flanc évasée (51') revêtant la forme d'une surface à double courbure dans l'espace.

2.  Machine à vis sans fin selon la revendication 1, caractérisée par le fait que l'évasement en V des flancs (51) est délimité, en fonction de la variation de forme de l'arbre sous l'effet du couple de rotation dudit arbre, par les conditions suivantes

$$x \leq 0,02\ D$$

$$y \leq \frac{L}{2}\ ou \leq D,$$

dans lesquelles

D = diamètre de l'arbre (1) considéré
L = longueur de l'élément hélicoïdal (3) considéré
x = cote de l'évasement considéré dans le sens périphérique, sur la face extrême (31)
y = cote de l'étendue axiale considérée de l'évasement.

3.  Machine à vis sans fin selon la revendication 1 ou 2, caractérisée par le fait que l'invention est appliquée à des éléments hélicoïdaux (3) résistant à l'usure et consistant uniquement en un matériau de dureté moyenne, métallique ou non métallique.

Fig. 1

Fig. 2

Fig.3

A ↓          B ↓

3
31

51    5    51'

Fig.4

31

D

X

Y

3

L

5

51'    31

6

Fig.5

3

C

D

Fig.6

51'

5

3

D